# EUROPÄISCHE PATENTSCHRIFT

(11) **EP 2 784 931 B1**
(45) Veröffentlichungstag und Bekanntmachung des Hinweises auf die Patenterteilung: **08.06.2022**
(21) Anmeldenummer: 13160772.3
(22) Anmeldetag: 25.03.2013
(51) Int. Cl.: H02P 29/02, H02P 29/024, H02P 6/28, H02M 1/00

(54) **Verfahren und Ansteuerschaltung zum Ansteuern eines bürstenlosen Elektromotors**
Method and control circuit for controlling a brushless electric motor
Procédé et circuit de commande destinés à la commande d'un moteur électrique sans brosse

(43) Veröffentlichungstag der Anmeldung: 01.10.2014
(73) Patentinhaber: ebm-papst Mulfingen GmbH & Co. KG, 74673 Mulfingen (DE)
(72) Erfinder: König, Daniel, 74582 Gerabronn (DE); Brand, Thomas, 74673 Mulfingen (DE)
(74) Vertreter: Staeger & Sperling Partnerschaftsgesellschaft mbB

(56) Entgegenhaltungen:
- WO-A2-2012/072075
- DE-A1- 19 849 907
- DE-A1-102008 056 400
- DE-A1-102009 033 026
- US-A1- 2008 007 190
- US-A1- 2011 234 127

## Beschreibung

Elektronisch kommutierte Elektromotoren, häufig auch kurz EC-Motoren genannt, sind hinlänglich bekannt; sie werden für zahlreiche Anwendungen eingesetzt, beispielsweise als Antriebe für Lüfter bzw. Ventilatoren in der Lüftungs- und Klimatechnik. Solche EC-Motoren arbeiten nachdem beschriebenen, gattungsgemäßen Verfahren und weisen dazu eine entsprechende Ansteuerschaltung der oben beschriebenen, gattungsgemäßen Art auf. Hierzu wird beispielhaft auf die Veröffentlichungen DE 10 2009 033026 A1, DE 198 49 907 A1, US 2011/234127 A1, WO 2012/072075 A2, EP 2 482 442 A1 und EP 2 267 883 A1 verwiesen, worin es allerdings vordringlich um spezielle Maßnahmen hinsichtlich der Ausgestaltung des Zwischenkreises als sogenannter "schlanker Zwischenkreis" mit minimaler Zwischenkreis-Reaktanz (Kapazität, Induktivität) geht.

Im praktischen Einsatz solcher EC-Motoren können Probleme durch insbesondere netzseitige Überspannungen und Überströme auftreten, sofern nicht alle Bauteile für besonders hohe Spannungen und Ströme ausgelegt sind, was aber den Kostenaufwand erhöht.

Der vorliegenden Erfindung liegt daher die Aufgabe zu Grunde, mit möglichst geringem Aufwand eine hohe Funktionssicherheit sowie auch einen wirtschaftlichen Betrieb des EC-Motors bzw. seiner Ansteuerschaltung zu gewährleisten.

Erfindungsgemäß wird dies einerseits durch ein Verfahren nach dem unabhängigen Anspruch 1 sowie andererseits durch eine Ansteuerschaltung nach dem Anspruch 4 erreicht. Vorteilhafte Ausgestaltungen sind in den jeweils abhängigen Ansprüchen sowie auch in der anschließenden Beschreibung enthalten.

Erfindungsgemäß wird demnach mit einem im Zwischenkreis, und zwar insbesondere in dessen Minusleitung angeordneten elektronischen Schalter durch eine getaktete Ansteuerung eine Spannungsbegrenzung und vorzugsweise auch eine Strombegrenzung im Zwischenkreisvorgenommen. Hierdurch können kostengünstige Bauteile mit einer für den Normalbetrieb ausgelegten und daher vergleichsweise niedrigen Spannungs- und Stromfestigkeit verwendet werden, ohne dass die Gefahr besteht, dass Bauteile durch Überspannungen und/oder Überströme geschädigt oder gar zerstört werden können. Durch die erfindungsgemäße Spannungsbegrenzung wird durch Vorgabe eines geeigneten Spannungsgrenzwertes, der kleiner/gleich der Bauteil-Spannungsfertigkeit ist, ein wirksamer Überspannungsschutz erreicht. Außerdem ist vorteilhafterweise zusätzlich auch sehr einfach ein Standby-Betrieb mit reduzierter Verlustleistung möglich, indem als Spannungsgrenzwert eine reduzierte Spannung für den Zwischenkreis vorgegeben wird, die in ihrer Höhe so bemessen ist, dass eine Grundfunktion der Motor-Steuerung noch gewährleistet bleibt, so dass die Motor-Steuerung einerseits den Standby-Betrieb initiieren, später aber auch wieder in den Normalbetrieb mit Kommutierung des Motors übergehen kann. Somit hat der erfindungsgemäße Zwischenkreis-Schalter in der bevorzugten Ausführung eine Dreifach-Funktion. Einzelheiten werden im Folgenden noch genauer beschrieben werden.

Anhand eines in der Zeichnung veranschaulichten, bevorzugten Ausführungsbeispiels soll die Erfindung im Folgenden genauer erläutert werden.

Es zeigen:
Fig. 1 ein Blockschaltbild einer bevorzugten Ausführung einer erfindungsgemäßen Ansteuerschaltung,
Fig. 2 ein Diagramm zur Erläuterung von Freilauf-Vorgängen,
Fig. 3 Diagramme zur Erläuterung einer Strombegrenzung,
Fig. 4 Diagramme zur Erläuterung einer Überspannungsbegrenzung der Zwischenkreis-Gleichspannung und
Fig. 5 Diagramme zur Erläuterung einer Spannungsbegrenzung auf einen Standby-Wert der Zwischenkreis-Gleichspannung.

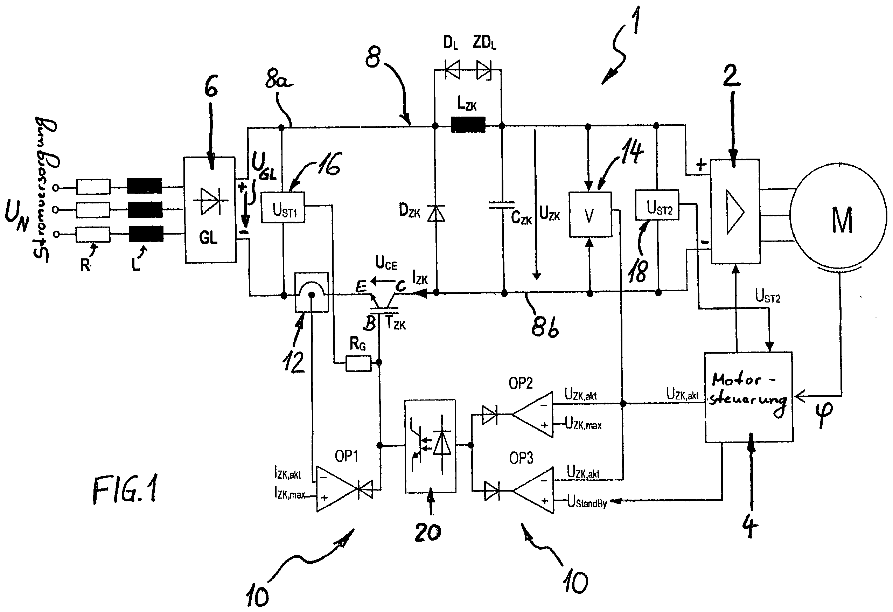

Gemäß Fig. 1 dient eine erfindungsgemäße Ansteuerschaltung 1 zum Ansteuern eines nur stark vereinfacht, schematisch dargestellten Elektromotors M, bei dem es sich bevorzugt um einen dreisträngigen, permanentmagneterregten Synchronmotor, kurz "PMSM", handelt, also eigentlich um einen Drehstrom-Motor, der allerdings mit Gleichspannung über einen gesteuerten Wechselrichter 2 betrieben wird. Deshalb wird ein solcher Elektromotor M häufig auch als kollektorloser, elektronisch kommutierter Gleichstrommotor oder auch kurz als EC-Motorbezeichnet.

Der Wechselrichter 2 ist in an sich hinlänglich bekannter Weise als Vollbrücken-Endstufe aus sechs gesteuerten Halbleiterschaltelementen (nicht gesondert dargestellt) aufgebaut, die von einer Motorsteuerung 4 (Motorcontrol) in Abhängigkeit von der mit geeigneten Mitteln erfassten Rotor-Drehposition ϕ zur Kommutierung und zur Drehzahleinstellung angesteuert werden. Dies erfolgt üblicherweise durch eine Pulsweitenmodulation (PWM), so dass quasi sinusförmige Motor-Strangspannungen und Strangströme moduliert werden.

Diese Art der Motorsteuerung ist hinlänglich bekannt und bedarf keiner weiteren Erläuterungen.

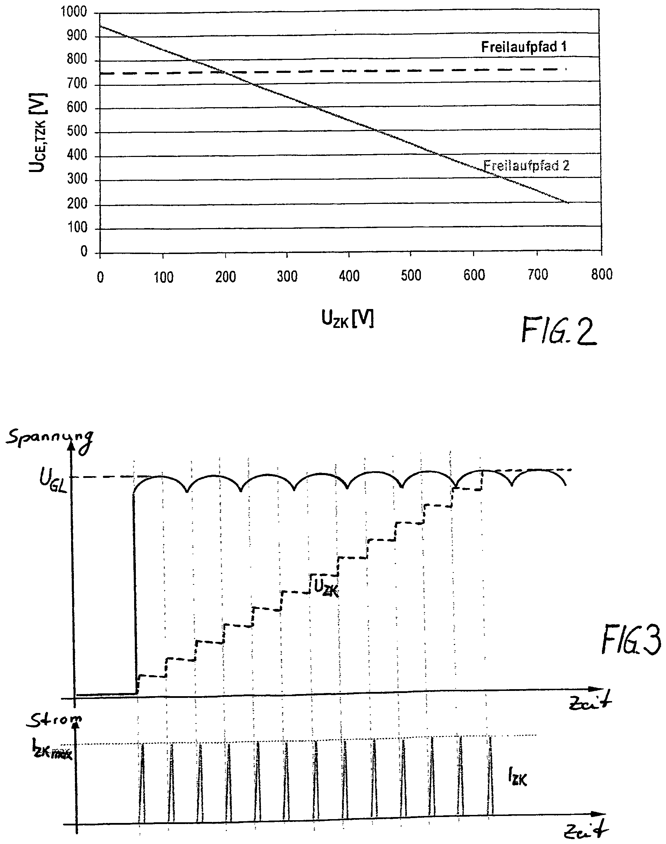

Zur Versorgung des Motors M wird zunächst eine insbesondere dreiphasige Netzwechselspannung UN (Power Supply) über einen ungesteuerten Netzgleichrichter 6 in eine Zwischenkreis-Gleichspannung U_{ZK} gleichgerichtet. Im Eingangskreis der Netzwechselspannung UN sind der Vollständigkeit halber in den drei Phasen Ersatz-Widerstände R und Ersatz-Induktivitäten L dargestellt. Am Ausgang des Netzgleichrichters 6 (GL) liegt eine pulsierende Gleichspannung an, deren Spitzenwert mit UGL bezeichnet ist, siehe auch die Diagramme in Fig. 3 bis 5. Der Netzgleichrichter 6 ist mit dem Wechselrichter 2 über einen Zwischenkreis 8 verbunden. Der Zwischenkreis 8 weist eine Plusleitung 8a und eine Minusleitung 8b auf. Innerhalb des Zwischenkreises 8 ist ein Zwischenkreis-Kondensator C_{ZK} parallel zum Netzgleichrichter 6 zwischen die Plusleitung 8a und die Minusleitung8b geschaltet, wobei dieser Zwischenkreis-Kondensator C_{ZK} zur Glättung der gleichgerichteten, zunächst mit dem Spitzenwert UGL pulsierenden Zwischenkreis-Gleichspannung U_{ZK} dient.

Hierbei kann der Zwischenkreis 8 wahlweise entweder als sogenannter "schlanker Zwischenkreis" oder als sogenannter "fetter Zwischenkreis" ausgebildet sein. Ein "schlanker Zwischenkreis" enthält nur eine sehr kleine Zwischenkreis-Impedanz, wozu der Zwischenkreis-Kondensator C_{ZK} eine sehr geringe Kapazität aufweist. So beträgt die Kapazität in einem "schlanken Zwischenkreis" beispielsweise nur maximal 10 %, bevorzugt aber sogar nur 1 % bis 7 % der eigentlich zur Glättung der gleichgerichteten, pulsierenden Zwischenkreis-Gleichspannung U_{ZK} in einem "fetten Zwischenkreis" erforderlichen Kapazität. Die Größe dieser Kapazität ist grundsätzlich zumindest von der Verbraucherleistung abhängig. Je nach Auslegung kann eine Kapazität in einem fetten Zwischenkreis beispielsweise 330 µF betragen; in diesem Beispielfall würde eine Auslegung mit schlankem Zwischenkreis zu einer Zwischenkreis-Kapazität in der Größenordnung von nur 5 bis 20 µF führen. Für einen fetten Zwischenkreis ist der Kondensator C_{ZK} üblicherweise von einem Elektrolytkondensator gebildet, während für einen schlanken Zwischenkreis ein einfacherer, preisgünstigerer und auch länger haltbarer Folienkondensator ausreicht.

Erfindungsgemäß ist in einer Leitung des Zwischenkreises 8, und zwar insbesondere in der Minusleitung 8b, ein elektronischer Schalter T_{ZK} mit seiner Schaltstecke (Kollektor-Emitter-Stecke C-E) angeordnet. Dieser Schalter T_{ZK} ist bevorzugt von einem Transistor gebildet, der überseinen Steueranschluss (Basis B) von einer Komparator-Beschaltung 10 in Abhängigkeit von der Höhe der Zwischenkreis-Gleichspannung U_{ZK} und/oder von der Höhe eines im Zwischenkreis 8 fließenden Zwischenkreis-Stromes I_{ZK} angesteuert wird. Der Schalter T_{ZK} hat im Betrieb den gesamten Zwischenkreis-Strom I_{ZK}, d. h. den Betriebsstrom der Kommutierungselektronik (Wechselrichter 2 und Motorsteuerung 4) sowie den Motor-Betriebsstrom, zu tragen.

Innerhalb des Zwischenkreises 8 ist zudem parallel zum Zwischenkreis-Kondensator C_{ZK} eine Freilauf-Diode D_{ZK} in Sperrrichtung zwischen Plusleitung 8a und Minusleitung 8b geschaltet. In der Plusleitung 8a liegt zwischen den Verbindungspunkten zu dem Zwischenkreis-Kondensator C_{ZK} und der Diode D_{ZK} eine Induktivität (Drossel) L_{ZK}, der ein weiterer Freilaufzweig mit einer Diode D_{L} und einer Zenerdiode Z_{DL} parallel geschaltet ist.

Zur Messung des Zwischenkreis-Stromes I_{ZK} ist - ebenfalls bevorzugt in der Minusleitung 8b - ein Stromsensor 12 vorgesehen, der beispielsweise als Mess-Shunt ausgebildet sein kann. Zur Messung der jeweils aktuellen Zwischenkreis-Spannung U_{ZK} ist ein geeigneter Spannungsmesser 14 im Zwischenkreis 8 zwischen die Plusleitung 8a und die Minusleitung 8b geschaltet.

Die erfindungsgemäße Komparator-Beschaltung 10 weist einen ersten Komparator OP1, einen zweiten Komparator OP2 und einen dritten Komparator OP3 auf. Diese Komparatoren sind bevorzugt - wie dargestellt - durch Operationsverstärker gebildet. Der erste Komparator OP1 bildet einen Strom-Komparator, der zweite Komparator OP2 bildet einen ersten Spannungs-Komparator und der dritte Komparator OP3 bildet einen zweiten Spannungs-Komparator.

Der Strom-Komparator OP1 vergleicht bevorzugt zur Strombegrenzung den jeweils aktuellen, über den Stromsensor 12 ermittelten Istwert I_{ZK,akt} des Zwischenkreis-Stromes I_{ZK} mit einem vorgegebenen maximalen Grenzwert I_{ZK,max}.

Der erste Spannungs-Komparator OP2 vergleicht erfindungsgemäß zum Überspannungsschutz den jeweils aktuellen, über den Spannungsmesser 14 ermittelten Istwert U_{ZK,akt} der Zwischenkreis-Gleichspannung U_{ZK} mit einem vorgegebenen maximalen Grenzwert U_{ZK,max}.

In einer bevorzugten Ausgestaltung der Erfindung vergleicht schließlich der zweite Spannungs-Komparator OP3 für einen Standby-Betrieb zur Reduzierung der Verlustleistung den jeweils aktuellen, über den Spannungsmesser 14 ermittelten Istwert U_{ZK,akt} der Zwischenkreis-Gleichspannung U_{ZK} mit einem vorgegebenen reduzierten Spannungswert U_{Standby}.

Innerhalb des Zwischenkreises 8 ist weiterhin eine erste Spannungsversorgung 16 zwischen die Plusleitung 8a und die Minusleitung 8bgeschaltet, die aus der Zwischenkreis-Gleichspannung U_{ZK} eine erste Steuerspannung U_{ST1} zur Versorgung des Zwischenkreis-Schalters T_{ZK} und des ersten Komparators OP1 bereitstellt. Weiterhin ist noch eine zweite, mit Vorteil durch ein Schaltnetzteil realisierte Spannungsversorgung 18 im Zwischenkreis 8 zwischen Plus- und Minusleitung 8a, 8b geschaltet, die aus der Zwischenkreis-Gleichspannung U_{ZK} eine zweite Steuerspannung U_{ST2} für die Motorsteuerung 4 sowie für die beiden Spannungs-Komparatoren OP2 und OP3 zur Verfügung stellt.

Da bei geöffnetem Zwischenkreis-Schalter T_{ZK} unterschiedliche Massepotenziale zwischen den Steuerspannungen U_{ST1} und U_{ST2} liegen, sind im dargestellten Ausführungsbeispiel die Ausgänge der beiden Komparatoren OP2 und OP3 über eine galvanische Trennung, wie dargestellt beispielsweise über einen Optokoppler 20, mit dem Steueranschluss B des Schalters T_{ZK} verbunden, während der erste Komparator OP1 den Schalter T_{ZK} direkt ansteuert.

Durch die bisher beschriebene Ausgestaltung der erfindungsgemäßen Ansteuerschaltung 1 hat der Zwischenkreis-Schalter T_{ZK} vorteilhafterweise eine Mehrfach-Funktion. In erster Linie dient er erfindungsgemäß zur Spannungsbegrenzung im Zwischenkreis 8, und zwar in Abhängigkeit von dem oberen Grenzwert U_{ZK, max} zum Überspannungsschutz (erste Funktion) und vorzugsweise in Abhängigkeit von dem reduzierten Grenzwert U_{Standby} für einen Standby-Betrieb der Ansteuerschaltung 1 (zweite Funktion). Weiterhin dient der Zwischenkreis-Schalter T_{ZK} mit Vorteil auch zur Strombegrenzung innerhalb des Zwischenkreises 8 (dritte Funktion). Diese Funktionen sollen im Folgenden einzeln genauer erläutert werden.

### A) Strombegrenzung

Bei herkömmlichen Ansteuerschaltungen kann - ohne sonstige strombegrenzende Maßnahmen, wie z. B. einen Serienwiderstand - durch die Zwischenkreis-Kapazität C_{ZK} im Einschaltmoment der Versorgungsspannung U_{N} im Zwischenkreis 8 ein sehr hoher Spitzenstrom I_{ZK} fließen, weil der Kondensator C_{ZK} noch nicht geladen ist und daher praktisch einen Kurzschluss darstellt. Dies birgt die Gefahr, dass vor allem im Bereich der Kontaktierung von Elektroden und Folien im Kondensator bedingt durch die hohen Spitzenströme punktuell sehr hohe Temperaturen entstehen können, so dass es zu thermischen Schäden durch Abbrennen der Kontakte kommen kann. Darüber hinaus ist die sogenannte Stromtragfähigkeit eines Kondensators durch die Dicke der Elektroden begrenzt, so dass je nach Höhe des Stromes wiederum Wärmeverluste entstehen. Kondensatoren sind allgemein sehr temperaturempfindlich, was sich in der Lebensdauer entsprechend negativ widerspiegelt. Weiterhin besitzt auch der erforderliche Netzgleichrichter 6 ebenso wie der Kondensator eine begrenzte Stromtragfähigkeit. Bei einer zu hohen Strombelastung des Gleichrichters 6 kann es auch hier zu Schäden oder sogar zu einer Zerstörung kommen, zumindest aber zur Beschleunigung des Alterungsprozesses in Folge der entstehenden Wärmeverluste. Alles dieses kann einen Ausfall der gesamten Kommutierungselektronik zur Folge haben.

Diese Probleme werden mit der Strombegrenzung der erfindungsgemäßen Ansteuerschaltung 1 vorteilhafterweise vermieden.

Ein weiteres Problem können zudem hohe Ströme auch während des Betriebs der Kommutierungselektronik sein. Solche hohen Ströme können jederzeit durch hohe netzseitige Spannungstransienten und Überspannungen hervorgerufen werden. Auch solche hohen Ströme können vorteilhafterweise mit der erfindungsgemäßen Schaltungstopologie begrenzt werden, da die Topologie auch im Normalbetrieb aktiv bleibt. Dabei wird der oben erwähnte Grenzwert I_{ZK,max} idealerweise so gewählt, dass ein im Normalbetrieb auftretender Motorstrom die Strombegrenzung nicht zum aktiven Eingreifen bringt, sondern nur ein unzulässiger Überstrom, der über dem vorgegebenen Grenzwert liegt.

Die Funktion der Strombegrenzung ist nun wie folgt.

Erreicht oder überschreitet der Strom-Istwert I_{ZK,akt} des Zwischenkreisstromes I_{ZK} z. B. beim Laden des Zwischenkreis-Kondensators C_{ZK} - den vorgegebenen Grenzwert I_{ZK,max}, so schaltet der Ausgang des Strom-Komparators OP1 um, so dass der Zwischenkreis-Schalter T_{ZK} abschaltet bzw. sperrt. In dieser Sperrphase des Schalters T_{ZK} entlädt sich die zuvor in der Zwischenkreis-Induktivität L_{ZK} gespeicherte Energie über die Freilaufdiode D_{ZK} (Freilaufpfad 1) bzw. über D_{L} und Z_{DL} (Freilaufpfad 2) in den Zwischenkreis 8. Mit Abschluss der Entladung der Energie von L_{ZK} endet auch der Stromfluss. Die Freilaufpfade 1 und 2 werden benötigt, da bedingt durch das schnelle Abschalten des Zwischenkreises 8 die noch in der Induktivität L_{ZK} vorhandene Energie im ersten Moment versucht, weiter zu fließen und hierbei Spannungsspitzen und Überschwinger entstehen können, die womöglich größer als die maximal zulässige Kollektor-Emitter-Spannung (beispielsweise 1200 V) des Zwischenkreis-Schalters T_{ZK} sind. Diese könnten zur Zerstörung des Schalters T_{ZK} führen. Da die Spannungen im Freilauf-Fall über den Freilaufpfad 2 für dessen Bauelemente bei endladendem Zwischenkreis ggf. zu groß sein können, wird der zusätzliche Freilaufpfad 1 benötigt. Somit wird je nach Höhe der Zwischenkreisspannung U_{ZK} die Energie über den Freilaufpfad 1 und/oder den Freilaufpfad 2 abgebaut:
- für den Freilaufpfad 1 ergibt sich unter Vernachlässigung der sogenannten Diodenflussspannung von D_{ZK} folgende Gleichung für die Kollektor-Emitter-Spannung am Schalter T_{ZK}: U_{CE}=U_{GL} im Freilaufpfad 2 liegen D_{L} und Z_{DL} zueinander in Reihe parallel zu der Induktivität L_{ZK}. Dabei kann Z_{DL} beispielsweise als Diode oder als Varistor ausgeführt sein. Für den Fall des Freilaufs über diese Anordnung ergibt sich folgende Gleichung für die Kollektor-Emitter-Spannung am Schalter T_{ZK}: U_{CE}=U_{GL}-U_{ZK}+U_{ZDL}.

In beiden vorstehenden Gleichungen stellt die Größe U_{GL} den Spitzenwert der gleichgerichteten Netzspannung am Ausgang des Netzgleichrichters 6 dar, siehe Fig. 1 sowie auch Diagramme in Fig. 3 bis 5.

Im Einschaltmoment bei U_{ZK} = 0 V wirkt somit zuerst der Freilaufpfad 1 über die Diode D_{ZK} bis zu einer bestimmten Zwischenkreisspannung, abhängig von der Durchbruchspannung von Z_{DL}, anschließend klingt die Energie im Freilaufpfad 2 über die Anordnung D_{L} und Z_{DL} ab. Dieser Effekt ist in Fig. 2 veranschaulicht.

Nach der Entladung der Energie aus der Zwischenkreis-Induktivität L_{ZK} schaltet nun der Strom-Komparator OP1 den Schalter T_{ZK} wieder ein, wodurch der Zwischenkreisstrom I_{ZK} mit einer von der Induktivität L_{ZK} abhängigen Steilheit ansteigt und der Ladevorgang somit erneut beginnt. Diese Schalt-Zyklen wiederholen sich solange, bis entweder der Zwischenkreiskondensator C_{ZK} auf die Spitzenspannung U_{GL} der Versorgungsspannung aufgeladen oder aber eine von zwei Spannungsgrenzen, die durch die beiden Spannungs-Komparatoren OP2 bzw. OP3 überwacht werden, erreicht ist, was weiter unten noch beschrieben wird. Der erfindungsgemäße Zwischenkreis-Schalter T_{ZK} arbeitet somit im Falle des Eingreifens nicht im Linearbetrieb, sondern stets im Taktbetrieb. Dieser getaktete Ladevorgang des Zwischenkreises 8 ist in Fig. 3 veranschaulicht. Daraus ergibt sich, dass durch einzelne Stromimpulse I_{ZK} die Zwischenkreis-Gleichspannung U_{ZK} in Stufen bis zum Spitzenwert U_{GL} der gleichgerichteten Netzspannung ansteigt. Dabei wird der Strom in jedem Stromimpuls auf den maximal zulässigen Grenzwert von I_{ZK,max} begrenzt, so dass Überströme und daraus resultierende negative Folgen vorteilhafterweise wirksam vermieden werden.

### B) Spannungsbegrenzung

Erfindungsgemäß wird die Spannung U_{ZK} im Zwischenkreis 8 durch die Komparator-Beschaltung 10 begrenzt, wobei vorteilhafterweise zweiverschiedene Grenzwerte vorgegeben werden, und zwar einerseits zum Überspannungsschutz und andererseits bevorzugt zeitweilig für einen Standby-Betrieb der Ansteuerschaltung 1.

### B1) Überspannungsschutz

Der erfindungsgemäße Zwischenkreis-Schalter T_{ZK} bietet als hauptsächliche Funktion die Möglichkeit, die in der Ansteuerschaltung 1, d.h. sowohl im Zwischenkreis 8 als auch im Wechselrichter 2 und in der Motorsteuerung 4 enthaltenen Bauteile vor Überspannungen zu schützen, die beispielsweise durch instabile Versorgungsnetze entstehen können. Dazu begrenzt der Zwischenkreis-Schalter T_{ZK} die Zwischenkreis-Gleichspannung U_{ZK}.

Die angelegte Versorgungsspannung U_{GL} teilt sich bei geöffnetem Schalter T_{ZK} in dessen Kollektor-Emitter-Spannung U_{CE} und die Zwischenkreis-Spannung U_{ZK} auf. Somit erhöht sich die Spannungsfestigkeit der Elektronik auf die Summe der maximal möglichen Zwischenkreisspannung und der maximalen Kollektor-Emitter-Spannung des Schalters: U_{GL}=U_{ZK}+U_{CE}

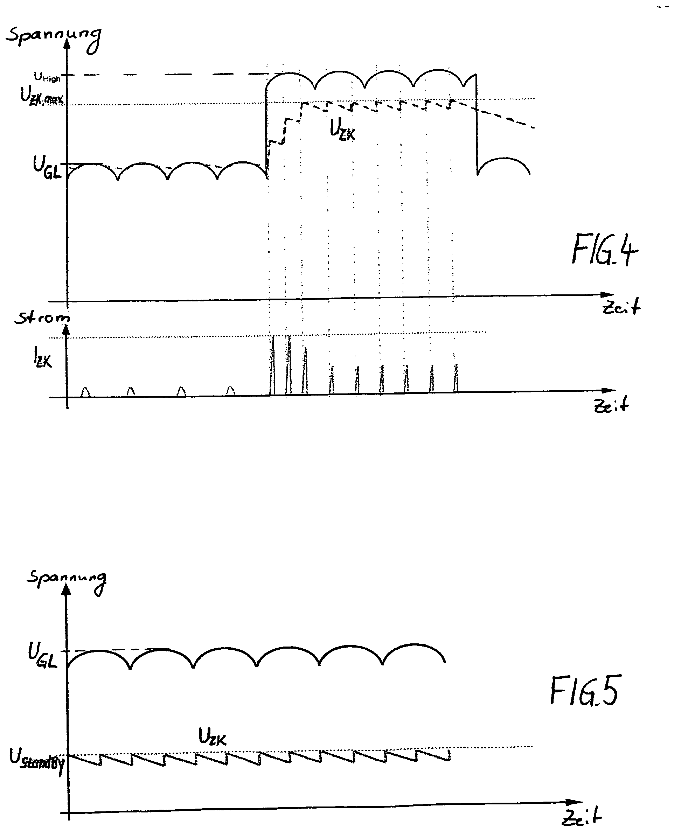

Um den Bauteil-Aufwand in einem vertretbaren Rahmen zu halten, werden Halbleiter-Bauelemente eingesetzt, deren Spannungsfestigkeit beispielsweise in einem 400 V Dreiphasen-Netz bis zu 1200 V beträgt. Daher soll die maximal zulässige Zwischenkreis-Gleichspannung U_{ZK} unterdiesem Grenzwert von beispielsweise 1200 V liegen, damit die Zerstörung von Bauelementen vermieden wird. Diese maximal zulässige Spannung wird dem ersten Spannungs-Komparator OP2 als Maximalwert U_{ZK,max} vorgegeben. Die über den Spannungsmesser 14 ermittelte aktuelle Zwischenkreis-Gleichspannung U_{ZK} wird dem Komparator OP2 als Istwert U_{ZK,akt} zugeführt. Der Komparator OP2 vergleicht nun ständig die aktuelle Zwischenkreis-Spannung U_{ZK,akt} mit dem vorgegebenen maximalen Grenzwert U_{ZK},max. Erreicht oder überschreitet der aktuelle Wert den Grenzwert, so schaltet der Komparator OP2 den Schalter T_{ZK} ab. Daraufhin entlädt sich der Zwischenkreis-Kondensator C_{ZK} durch die im Zwischenkreis 8 befindlichen Mess-Spannungsteiler sowie durch die zweite Spannungsversorgung 18 (UST2) um einen vorgegebenen Schwellwert, bis der Komparator OP2 wiederumschaltet und den Schalter T_{ZK} wieder einschaltet. Der Zwischenkreis 8 wird dann erneut - bei weiterhin vorhandener Überspannung U_{High} (vgl.Fig. 4) - bis zur Abschaltschwelle nachgeladen. Dieser Ablauf wiederholt sich so lange, bis die Überspannung U_{High} auf einen Wert unterhalb der Abschaltschwelle sinkt. Diese Vorgänge sind in Fig. 4 veranschaulicht. Die Zwischenkreis-Gleichspannung U_{ZK} wird somit bei anhaltender Netz-Überspannung durch Taktung auf einem konstanten Niveau gehalten, wodurch ein dauerhafter Überspannungsschutzgewährleistet ist.

Zudem ergibt sich aus Fig. 4, dass auch hierbei der durch den steilen Spannungsanstieg im Wiedereinschaltmoment verursachte Ladestrom I_{ZK} auf den maximal zulässigen Strom I_{ZK,max} begrenzt wird. Hierzu wird auf die obige Beschreibung im Abschnitt A) verwiesen. Somit wird auch hierbeider Zwischenkreis-Kondensator C_{ZK} stufenweise aufgeladen.

Es sei noch erwähnt, dass während einer Überspannungsphase keine Kommutierung des Motors M stattfinden sollte, damit der Zwischenkreis-Kondensator C_{ZK} nicht übermäßig entladen und infolgedessen die Spannungsfestigkeit der gesamten Kommutierungselektronikreduziert wird. Somit setzt in einem Überspannungsfall die Motorsteuerung 4 die Kommutierung aus, bis die Spannung wieder absinkt. Die Detektion der Überspannung kann beispielsweise, wie in Fig. 1 dargestellt, durch Rückführung der aktuellen Zwischenkreisspannung U_{ZK,akt} über einen Spannungsteiler an die Motorsteuerung 4 erfolgen. Die Motorsteuerung 4 unterbricht bei Einreichen oder Überschreiten eines Schwellwertes, der bevorzugt der im gleichen Verhältnis wie U_{ZK,akt} heruntergeteilten Spannung von U_{ZK,max} entspricht, die Kommutierung des Motors M.

### B2) Standbv-Betrieb

Analog zu der zuvor beschriebenen Funktionsweise der Überspannungs-Abschaltung kann vorteilhafterweise auch ein Standby-Betrieb erfolgen, indem lediglich ein geringerer Spannungs-Grenzwert vorgegeben wird. Somit beruht das Prinzip des Standby-Betriebs ebenfalls auf der Taktung der Zwischenkreis-Spannung U_{ZK}, dies allerdings auf einen geringeren Spannungswert unterhalb der nominalen, gleichgerichteten Netz-Eingangsspannung. Hierdurch kann vorteilhafterweise die Leistungsaufnahme der Kommutierungselektronik reduziert werden. Dabei wird der Spannungswert der Zwischenkreis-Gleichspannung U_{ZK} im Standby-Betrieb zweckmäßig so gewählt, dass die Niederspannungserzeugung für die Motorsteuerung 4 über die zweite Spannungsversorgung 18 noch sachgerecht arbeitet.

Der Standby-Betrieb ist in Fig. 5 veranschaulicht. In dem Diagramm ist eine reduzierte Zwischenkreisspannung U_{Standby} eingezeichnet, wobei U_{GL} die gleichgerichtete Netz-Eingangsspannung und U_{ZK} die getaktete Zwischenkreisspannung darstellen.

Der Standby-Betrieb wird von der Motorsteuerung 4 aktiviert, sobald keine Kommutierung des Motors M erfolgt. Für diesen Fall wird dem zweiten Spannungs-Komparator OP3 ein entsprechender, reduzierter Grenzwert U_{Standby} vorgegeben. Über einen zweiten Eingang wird auch dem Komparator OP3 der über den Spannungsmesser 14 ermittelte Istwert U_{ZK,akt} der Zwischenkreis-Spannung zugeführt. Erreicht oder überschreitet der Istwert den vorgegebenen Grenzwert, so schaltet der Komparator OP3 den Schalter T_{ZK} ab und anschließend - analog zur oben erläuterten Spannungsbegrenzung - nach einer kurzen Endladephase des Zwischenkreis-Kondensators C_{ZK} mit einer geringen Hysterese wieder ein. Somit wird gemäß Fig. 5 auch hier die Zwischenkreisspannung durch Taktung des Schalters T_{ZK} begrenzt.

Abschließend sei noch erwähnt, dass der Zwischenkreis-Schalter T_{ZK} mit Vorteil als IGBT oder als MosFET ausgeführt sein kann.

Durch die obige Beschreibung wird deutlich, dass der Zwischenkreis-Schalter T_{ZK} vorteilhafterweise eine Mehrfachfunktion hat. So kann er den Eingangsstrom in den Zwischenkreiskondensator C_{ZK} begrenzen, indem bei Überschreiten eines maximal vorgegebenen Grenzwertes der Schalter abgeschaltet und nach Abklingen des Stromes wieder zugeschaltet wird. Der Kondensator C_{ZK} wird somit unter Strombegrenzung stufenweise geladen. Eine weitere, erfindungsgemäße Funktion des Schalters T_{ZK} ist die Spannungsbegrenzung, einerseits zur Abschaltung bei hohen netzseitigen Spannungstransienten sowie Überspannungen zum Schutz aller Halbleiter-Bauelemente sowie andererseits für einen Standby-Betrieb, der vorteilhafterweise eine Reduzierung der Verlustleistung im Zwischenkreis 8 durch die reduzierte Zwischenkreis-Spannung U_{ZK} zur Folge hat.

Durch die Erfindung werden wichtige Vorteile erreicht: Vermeidung von Schäden und beschleunigter Alterung von Halbleiter Bauelementen in Folge eines netzseitigen Überstromes Vermeidung von thermischen Überlastungen und einer beschleunigten Alterung des Zwischenkreis-Kondensators in Folge eines zu hohen Ladestromes Vermeidung der Zerstörung von Leistungshalbleitern in Folge von Überspannung Schutz der gesamten Motor-Ansteuerschaltung 1 sowie auch des Motors M bei schlechten bzw. hochimpedanten Netzen Begrenzung des Einschaltstromes Vermeidung von zu hohen Betriebsströmen Erhöhung der Eingangsspannungsfestigkeit der gesamten Schaltung Reduzierung der Standby-Verluste im Zwischenkreis.

## Patentansprüche

1. Verfahren zum Ansteuern eines bürstenlosen, elektronisch kommutierten Elektromotors (M), wobei eine Netzwechselspannung (UN) in eine Zwischenkreis-Gleichspannung (UZK) gleichgerichtet und diese Gleichspannung (UZK) über einen, einen Zwischenkreis-Kondensator (CZK) enthaltenden Zwischenkreis (8) einem Wechselrichter (2) zugeführt wird, der von einer Motorsteuerung (4) zur Speisung und Kommutierung des Elektromotors (M) angesteuert wird,
wobei die Zwischenkreis-Gleichspannung (UZK) bezüglich ihrer Spannungshöhe überwacht und mit einem vorgegebenen Grenzwert (UZK,max/UStandby) verglichen wird, **dadurch gekennzeichnet, dass** ein in einer der Leitungen (8a, 8b) des Zwischenkreises (8) angeordneter elektronischer Schalter (TZK) mit seiner Schaltstrecke (C-E) über eine Komparator-Beschaltung (10) in Abhängigkeit von der jeweils als aktueller Istwert (UZK,akt) erfassten Zwischenkreis-Gleichspannung (UZK) und von einem vorgegebenen Grenzwert (UZK,max/UZK,Standby) angesteuert und in einem Taktbetrieb betrieben wird, dass bei Erreichen oder Überschreiten des Grenzwertes die Zwischenkreis-Gleichspannung (UZK) durch getaktetes Abschalten und Wiedereinschalten des Schalters (TZK) auf den vorgegebenen Grenzwert begrenzt wird, wobei der elektronische Schalter (TZK) ein Transistor ist, wobei für eine Strombegrenzung innerhalb des Zwischenkreises (8) ein im Zwischenkreis (8) fliessender Zwischenkreisstrom (IZK) überwacht und mit einem vorgegebenen Grenzwert (IZK,max) verglichen wird, wobei bei Erreichen oder Überschreiten des Grenzwertes (IZK,max) der Zwischenkreisstrom (IZK) durch getaktetes Abschalten und Wiedereinschalten auf den Grenzwert (IZK,max) begrenzt wird.

2. Verfahren nach Anspruch 1,
**dadurch gekennzeichnet, dass** die Zwischenkreis-Gleichspannung (UZK) zur Überspannungsbegrenzung durch Vorgabe einer maximalen zulässigen Spannung (UZK,max) als Grenzwert auf einen Wert begrenzt wird, der kleiner/gleich einer bauteilspezifischen Spannungsfestigkeit von mit der Zwischenkreis-Gleichspannung (UZK) beaufschlagten Bauteilen ist.

3. Verfahren nach Anspruch 1 oder 2,
**dadurch gekennzeichnet, dass** die Zwischenkreis-Gleichspannung (UZK) für einen Standby-Betrieb mit reduzierter Verlustleitung durch Vorgabe eines reduzierten Grenzwertes (UStandby) auf einen Wert begrenzt wird, der noch eine Mindestversorgung einer Motor-Steuerung (4) gewährleistet.

4. Ansteuerschaltung (1) eines bürstenlosen, elektronisch kommutierten Elektromotors (M), wobei die Ansteuerschaltung (1) das Verfahren nach einem der vorhergehenden Ansprüche 1 bis 3 durchführt, mit einem Netzgleichrichter (6), einem nachgeschalteten Zwischenkreis (8) mit einer Plusleitung (8a) und einer Minusleitung (8b) sowie mit einem aus dem Zwischenkreis (8) mit einer Zwischenkreis-Gleichspannung (UZK) gespeisten und zur Kommutierung des Elektromotors (M) von einer elektronischen Steuerung (4) ansteuerbaren Wechselrichter (2), wobei im Zwischenkreis (8) ein Zwischenkreis-Kondensator (CZK) angeordnet ist,
**dadurch gekennzeichnet, dass** in einer der Leitungen (8a, 8b) des Zwischenkreises (8) ein in einem Taktbetrieb betreibbarer elektronischer Schalter (TZK) mit seiner Schaltstrecke (C-E) angeordnet ist, wobei der Schalter (TZK) ein Transistor ist, der im Normalbetrieb geschlossen ist und über eine Komparator-Beschaltung (10) in Abhängigkeit von der jeweils als aktueller Istwert (UZK,akt) erfassten Zwischenkreis-Gleichspannung (UZK) und von einem vorgegebenen Grenzwert (UZK,max/UZK,Standby) in einem Taktbetrieb betrieben wird oder betrieben werden kann, dass bei Erreichen oder Überschreiten des Grenzwertes die Zwischenkreis-Gleichspannung (UZK) durch getaktetes Schalten des Schalters (TZK) auf den vorgegebenen Grenzwert begrenzt wird.

5. Ansteuerschaltung nach Anspruch 4,
**dadurch gekennzeichnet, dass** der elektronische Schalter (TZK) über die Komparator-Beschaltung (10) zusätzlich in Abhängigkeit von einem im Zwischenkreis (8) fliessenden und jeweils als aktueller Istwert (IZK,akt) erfassten Zwischenkreisstrom (IZK) und von einem vorgegebenen, maximal zulässigen Strom-Grenzwert (IZK,max) so ansteuerbar ist, dass bei Erreichen oder Überschreiten des Grenzwertes der Zwischenkreisstrom (IZK) durch getaktetes Schalten des Schalters (TZK)auf den vorgegebenen Grenzwert begrenzt wird, wobei der Zwischenkreis-Kondensator (CZK) durch Stromimpulse stufenweise geladen wird.

6. Ansteuerschaltung nach Anspruch 4 oder 5,
**dadurch gekennzeichnet, dass** die Komparator-Beschaltung (10) einen ersten Spannungs-Komparator (OP2) zur Überspannungsbegrenzung aufweist, wobei als Grenzwert eine unter Berücksichtigung von Bauteil-Spannungsfestigkeiten maximal zulässige Zwischenkreis-Gleichspannung (UZK,max) vorgegeben wird.

7. Ansteuerschaltung nach einem der Ansprüche 4 bis 6,
**dadurch gekennzeichnet, dass** die Komparator-Beschaltung (10) einen zweiten Spannungs-Komparator (OP3) aufweist, dem für einen Standby-Betrieb als Grenzwert eine reduzierte, für eine Mindestversorgung der Motor-Steuerung (4) noch ausreichende Zwischenkreis-Spannung (UStandby) vorgegeben wird.

8. Ansteuerschaltung nach einem der Ansprüche 4 bis 7,
**dadurch gekennzeichnet, dass** die Komparator-Beschaltung (10) einen ausgangsseitig mit einem Steueranschluss (B) des elektronischen Schalters (TZK) verbundenen Strom-Komparator (OP1) aufweist.

9. Ansteuerschaltung nach einem der Ansprüche 6 bis 8,
**dadurch gekennzeichnet, dass** die Spannungs-Komparatoren (OP2, OP3) ausgangsseitig über eine galvanische Trennung, insbesondere über einen Optokoppler (20), mit einem Steueranschluss (B) des elektronischen Schalters (TZK) verbunden sind.

10. Ansteuerschaltung nach einem der Ansprüche 4 bis 9,
**dadurch gekennzeichnet, dass** der elektronische Schalter (TZK) in der Minusleitung (8b) des Zwischenkreises (8) angeordnet ist.

## Claims

1. Method for controlling a brushless, electronically commutated electric motor (M), a mains AC voltage (U_{N}) being rectified into an intermediate circuit direct voltage (U_{ZK}) and this direct voltage (U_{ZK}) being fed by an intermediate circuit (8) containing an intermediate circuit capacitor (C_{ZK}) to an inverter (2) which is controlled by a motor control means (4) for feeding and commutating the electric motor (M), wherein the intermediate circuit direct voltage (U_{ZK}) is monitored in respect of its voltage level and is compared with a predetermined limiting value (U_{ZK,max}/U_{Standby}), **characterized in that** an electronic switch (T_{ZK}) with its clearance between open contacts (C-E) is arranged in one of the lines (8a, 8b) of the intermediate circuit (8), wherein said switch (T_{ZK}) is controlled by a comparator wiring (10) subject to the intermediate circuit direct voltage (U_{ZK}), detected in each case as the prevailing actual value (U_{ZK,akt}) and by a predetermined limiting value (U_{ZK,max}/U_{ZK,Standby}) and operated in a clocked operation, such that on reaching or exceeding the limiting value, the intermediate circuit direct voltage (U_{ZK}) is limited to the predetermined limiting value by clocked disconnection and reconnection, wherein said electronic switch (T_{ZK}) is a transistor, wherein to limit current within the intermediate circuit (8), an intermediate circuit current (I_{ZK}) flowing in the intermediate circuit (8) is monitored and compared with a predetermined limiting value (I_{ZK,max}) and, on reaching or exceeding the limiting value (I_{ZK,max}), the intermediate circuit current (I_{ZK}) is limited to the limiting value (I_{ZK,max}) by a clocked disconnection and reconnection.

2. Method according to claim 1, **characterised in that** to limit an overvoltage by presetting a maximally permissible voltage (U_{ZK,max}) as limiting value, the intermediate circuit direct voltage (U_{ZK}) is limited to a value which is less than/equal to a component-specific electrical strength of components subjected to the intermediate circuit direct voltage (U_{ZK}).

3. Method according to either claim 1 or claim 2, **characterised in that** for a standby operation with reduced power loss, by presetting a reduced limiting value (U_{Standby}), the intermediate circuit direct voltage (U_{ZK}) is limited to a value which still ensures a minimum supply to a motor control means (4).

4. Control circuit (1) of a brushless, electronically commutated electric motor (M), wherein the control circuit (1) is carrying out the method according to any of the preceding claims 1 to 3, comprising a power rectifier (6), an intermediate circuit (8) connected downstream having a positive line (8a) and a negative line (8b) and also comprising an inverter (2) fed from the intermediate circuit (8) with an intermediate circuit direct voltage (U_{ZK}) and controllable by an electronic control means (4) for commutating the electric motor (M), an intermediate circuit capacitor (C_{ZK}) being arranged in the intermediate circuit (8), **characterised in that** an electronic switch (T_{ZK}) being operable in a clocked operation with its clearance between open contacts (C-E) is arranged in one of the lines (8a, 8b) of the intermediate circuit (8), wherein said switch (T_{ZK}) is a transistor being closed in normal operation and is operated or being operable in a clocked operation a comparator wiring (10) subject to the intermediate circuit direct voltage (U_{ZK}), detected in each case as the prevailing actual value (U_{ZK,akt}) and by a predetermined limiting value (U_{ZK,max}/U_{ZK,Standby}) such that on reaching or exceeding the limiting value, the intermediate circuit direct voltage (U_{ZK}) is limited to the predetermined limiting value by a clocked connection of the switch (TZK).

5. Control circuit according to claim 4, **characterised in that** the electronic switch (T_{ZK}) is controllable by the comparator wiring (10) also subject to an intermediate circuit current (I_{ZK}), flowing in the intermediate circuit (8) and detected in each case as the prevailing actual value (I_{ZK,akt}) and by a predetermined, maximally permissible current limiting value (_{IZK,max}) such that on reaching or exceeding the limiting value, the intermediate circuit current (I_{ZK}) is limited to the predetermined limiting value by a clocked connection of the switch (T_{ZK}), the intermediate circuit capacitor (C_{ZK}) being charged in stages by current pulses.

6. Control circuit according to either claim 4 or claim 5, **characterised in that** the comparator wiring (10) has a first voltage comparator (OP2) to limit overvoltage, an intermediate circuit direct voltage (U_{ZK,max}) which is maximally permissible considering component electrical strengths being preset as the limiting value.

7. Control circuit according to any of claims 4 to 6, **characterised in that** the comparator wiring (10) has a second voltage comparator (OP3), in which is preset a reduced intermediate circuit voltage (U_{Standby}) which is still sufficient for a minimum supply to the motor control means (4), as the limiting value for a standby operation.

8. Control circuit according to any of claims 4 to 7, **characterised in that** the comparator wiring (10) has a current comparator (OP1) which is connected on the output side to a control connection (B) of the electronic switch (T_{ZK}).

9. Control circuit according to any of claims 6 to 8, **characterised in that** the voltage comparators (OP2, OP3) are connected on the output side to a control connection (B) of the electronic switch (T_{ZK}) by a galvanic isolation, in particular by an optocoupler (20).

10. Control circuit according to any of claims 4 to 9, **characterised in that** the electronic switch (T_{ZK}) is arranged in the negative line (8b) of the intermediate circuit (8).

## Revendications

1. Procédé permettant de piloter un moteur électrique sans balais (M) à commutation électronique, dans lequel une tension alternative de secteur (UN) est redressée en tension continue de circuit intermédiaire (UZK), et cette tension continue (UZK) est amenée par un circuit intermédiaire (8) comportant un condensateur de circuit intermédiaire (CZK) à un onduleur (2) qui est piloté par une commande moteur (4) pour alimenter et commuter le moteur électrique (M),
la tension continue de circuit intermédiaire (UZK) étant surveillée quant à son niveau de tension et comparée avec une valeur limite prédéfinie (UZK,max/UStandby),
**caractérisé en ce qu'**un commutateur électronique (TZK) avec son trajet de commutation (C-E), disposé sur l'un des conducteurs (8a, 8b) du circuit intermédiaire (8), est piloté par un câblage de comparateur (10) en fonction de la tension continue de circuit intermédiaire (UZK) détectée respectivement comme valeur réelle actuelle (UZK,akt) et d'une valeur limite prédéfinie (UZK,max/UZK,Standby) et fonctionne en mode cadencé, **en ce que** lorsque la valeur limite est atteinte ou dépassée, la tension continue de circuit intermédiaire (UZK) est limitée à la valeur limite prédéfinie par une mise hors tension et une remise sous tension cadencées du commutateur (TZK), le commutateur électronique (TZK) étant un transistor, dans lequel, pour une limitation de courant à l'intérieur du circuit intermédiaire (8), un courant de circuit intermédiaire (IZK) circulant dans le circuit intermédiaire (8) est surveillé et comparé avec une valeur limite prédéfinie (IZK,max), dans lequel, lorsque la valeur limite (IZK,max) est atteinte ou dépassée, le courant de circuit intermédiaire (IZK) est limité à la valeur limite (IZK,max) par une mise hors tension et une remise sous tension cadencées.

2. Procédé selon la revendication 1, **caractérisé en ce que** pour une limitation de surtension, la tension continue de circuit intermédiaire (UZK) est limitée par la spécification d'une tension admissible maximale (UZK,max) comme valeur limite à une valeur qui est inférieure ou égale à une rigidité diélectrique spécifique aux composants des composants soumis à la tension continue de circuit intermédiaire (UZK).

3. Procédé selon la revendication 1 ou 2, **caractérisé en ce que** pour un mode veille à perte de puissance réduite, la tension continue de circuit intermédiaire (UZK) est limitée par la spécification d'une valeur limite réduite (UStandby) à une valeur qui garantit encore une alimentation minimale d'une commande moteur (4).

4. Circuit de pilotage (1) d'un moteur électrique sans balais (M) à commutation électronique, le circuit de pilotage (1) exécutant le procédé selon l'une quelconque des revendications précédentes 1 à 3, comprenant un redresseur de secteur (6), un circuit intermédiaire (8) placé en aval doté d'un conducteur positif (8a) et d'un conducteur négatif (8b), ainsi qu'un onduleur (2) alimenté à partir du circuit intermédiaire (8) par une tension continue de circuit intermédiaire (UZK) et pouvant être piloté par un dispositif de commande électronique (4) pour la commutation du moteur électrique (M), un condensateur de circuit intermédiaire (CZK) étant disposé dans le circuit intermédiaire (8),
**caractérisé en ce qu'**un commutateur électronique (TZK) avec son trajet de commutation (C-E) pouvant fonctionner en mode cadencé est disposé dans l'un des conducteurs (8a, 8b) du circuit intermédiaire (8), le commutateur (TZK) étant un transistor qui est fermé en mode normal et est actionné ou peut être actionné en mode cadencé par un câblage de comparateur (10) en fonction de la tension continue de circuit intermédiaire (UZK) détectée respectivement comme valeur réelle actuelle (UZK,akt) et d'une valeur limite prédéfinie (UZK,max/UZK,Standby), **en ce que** lorsque la valeur limite est atteinte ou dépassée, la tension continue de circuit intermédiaire (UZK) est limitée par une commutation cadencée du commutateur (TZK) à la valeur limite prédéfinie.

5. Circuit de pilotage selon la revendication 4, **caractérisé en ce que** le commutateur électronique (TZK) peut être piloté par le câblage de comparateur (10) en plus en fonction d'un courant de circuit intermédiaire (IZK) circulant dans le circuit intermédiaire (8) et respectivement détecté comme valeur réelle actuelle (IZK,akt) et d'une valeur limite de courant admissible maximale (IZK,max) prédéfinie de telle sorte que lorsque la valeur limite est atteinte ou dépassée, le courant de circuit intermédiaire (IZK) est limité par une commutation cadencée du commutateur (TZK) à la valeur limite prédéfinie, le condensateur de circuit intermédiaire (CZK) étant chargé progressivement par des impulsions électriques.

6. Circuit de pilotage selon la revendication 4 ou 5, **caractérisé en ce que** le câblage de comparateur (10) présente un premier comparateur de tension (OP2) servant à la limitation de surtension, une tension continue de circuit intermédiaire admissible maximale (UZK,max) étant prédéfinie comme valeur limite en tenant compte des résistances diélectriques des composants.

7. Circuit de pilotage selon l'une quelconque des revendications 4 à 6, **caractérisé en ce que** le câblage de comparateur (10) présente un deuxième comparateur de tension (OP3) auquel une tension de circuit intermédiaire (UStandby) réduite, encore suffisante pour une alimentation minimale de la commande moteur (4), est spécifiée comme valeur limite pour un mode veille.

8. Circuit de pilotage selon l'une quelconque des revendications 4 à 7, **caractérisé en ce que** le câblage de comparateur (10) présente un comparateur de courant (OP1) relié côté sortie à une borne de commande (B) du commutateur électronique (TZK).

9. Circuit de pilotage selon l'une quelconque des revendications 6 à 8, **caractérisé en ce que** les comparateurs de tension (OP2, OP3) sont reliés côté sortie par une isolation galvanique, en particulier par un optocoupleur (20), à une borne de commande (B) du commutateur électronique (TZK).

10. Circuit de pilotage selon l'une quelconque des revendications 4 à 9, **caractérisé en ce que** le commutateur électronique (TZK) est disposé sur le conducteur négatif (8b) du circuit intermédiaire (8).
